# DEMANDE DE BREVET EUROPEEN

(11) **EP 0 631 725 A1**
(43) Date de publication de la demande: **04.01.1995**
(21) Numéro de dépôt: 94500118.8
(22) Date de dépôt: 01.07.1994
(51) Int. Cl.: A21C 13/00

(54) **Chariot de cuisson**

(30) Priorité: 02.07.1993 ES 9301488
(71) Demandeur: Sanchez Sanchez, Francisca, E-08912 Badalona (Barcelona) (ES)
(72) Inventeur: Gomez Sanchez, José, E-08912 Badalona (Barcelona) (ES)
(74) Mandataire: Urizar Anasagasti, Jesus Maria

(57) **Abrégé**

Chariot de cuisson qui comprend une base de support (1), avec des moyens de roulement (2), à laquelle est fixée, sur l'un de ses latéraux, une barre verticale (3), sur laquelle sont montés de nombreux cadres porte-plateaux (4) au moyen d'éléments tubulaires (5) solidaires d'un des latéraux de ceux-là. Ces éléments tubulaires (5) permettent le pivotement indépendant de chaque porte-plateaux (4) sur la barre verticale (3), et se trouvent séparés sur la barre (3) par des butées (8) qui ne peuvent pas pivoter, qui agissent comme des séparateurs et qui empêchent que le poids de chaque plateau ne retombe sur ceux qui sont au-dessous. Sur chaque porte-plateaux (4) est placé un plateau (6) sur lequel on pose plusieurs portions de pâte pour élaborer des produits de pâtisserie, de boulangerie ou de viennoiserie. Le chariot de cuisson comprend de plus des moyens pour le blocage des porte-plateaux (4) dans une position déterminée.

## Description

Le présent mémoire descriptif concerne, tel que l'indique son titre, un chariot de cuisson du type de ceux employés pour le support de produits de boulangerie, pâtisserie et viennoiserie, durant la période de fermentation, de cuisson et, après cette dernière, jusqu'au moment où l'on sort le produit une fois cuit.

Actuellement, l'utilisation de chariot pour le support et la cuisson d'articles faits à base de pâtes comestibles, que ce soit de la pâtisserie, de la boulangerie ou de la viennoiserie, est largement répandue; l'ensemble de ces chariots présentent une base de support avec des moyens de roulement qui permettent leur déplacement; sur la base de support est disposée une structure rigide, composée de préférence de tubes soudés entre eux et à la base, en soudant sur les latéraux internes face à face des montants verticaux des guides équidistants qui configurent les moyens de support des plateaux sur lesquels est posé le produit.

Ces plateaux peuvent être positionnés à l'intérieurÊde la structure en les déplaçant sur les guides mentionnés, disposés horizontalement, en alignement vertical y avec une certaine séparation entre deux plateaux consécutifs afin que chacun d'eux ne soit pas en contact avec les produits posés sur le plateau immédiatement inférieur; étant donnée que cet écart est réduit, afin que le chariot puisse supporter le plus grand nombre possible de plateaux tout en conservant une hauteur déterminée, chaque fois qu'il est nécessaire d'accéder à la surface supérieur des plateaux, soit pour poser les portions de pâte, soit pour leur fermentation, soit pour les découper avant la cuisson, soit pour les sortir une fois cuites, il est nécessaire que l'opérateur réalise l'extraction des plateaux un à un, et les remette sur le chariot; étant donné que chaque chariot intègre environ quinze plateaux et que, à chaque cuisson, chaque plateau doit être sorti trois fois puis réintroduit trois fois, cela suppose que l'opérateur doit réaliser quatre-vingt-dix mouvements de plateau à chaque cuisson, en supportant le poids correspondant plus celui des produits qui y sont posés.

De plus, il faut tenir compte qu'en raison de l'alignement vertical des plateaux, certains se trouvent pratiquement au niveau du sol et d'autres en hauteur, ce qui rend le travail à réaliser particulièrement pénible.

C'est pour pallier ces problèmes que le chariot de cuisson objet de la présente invention a été conçu, lequel comprend une base de support analogue à celles connues actuellement, avec des moyens d'appui sur sa zone inférieure et au-dessus de laquelle sont disposés un nombre variable de cadres porte-plateaux, dont deux latéraux configurent les moyens d'appui des plateaux sur lesquels sont posées les pièces de pâte.

Les cadres porte-plateaux présentent extérieurement, sur l'un des latéraux, des moyens de support qui pemettent le montage de ceux-ci sur une barre vertical solidaire de la base, ces moyens de support permettant que les cadres porte-plateaux puissent pivoter librement sur la barre verticale, en restant toujours en position horizontale.

Afin d'éviter que les porte-plateaux placés sur la barre verticale chargent leur poids sur ceux disposés au-dessous, ce qui pourrait provoquer qu'à chaque fois qu'on fait pivoter un plateau, les plateaux proches pivoteraient involontairement, il est prévu de fixer sur la barre verticale des butées inter-distantes, qui ne peuvent pas pivoter, et qui empêchent le déplacement vertical des cadres porte-plateaux et les rendent indépendants par rapport au pivotement.

Grâce à cette configuration du chariot de cuisson, on évite à l'utilisateur de réaliser l'extraction du plateau chaque fois qu'il doit manipuler les pièces de produit, soit pour les positionner sur les plateaux, soit pour les découper, soit pour les sortir une fois cuites; pour réaliser d'autres opérations il suffit de faire pivoter le porte-plateaux correspondant sur la barre verticale, un angle suffisant pour que les plateaux supérieurs n'empêchent pas l'accès direct à la surface supérieure du plateau déplacé; une fois manipulé le produit disposé sur ce plateau, il revient à sa position originale au moyen du pivotement correspondant.

Il est prévu que le chariot objet de cette invention intègre des moyens de blocage des porte-plateaux lorsqu'ils sont tous alignés verticalement sur la base de support; ainsi, on empêche que les porte-plateaux pivotent librement durant le déplacement du chariot.

Un autre avantage de ce chariot par rapport aux chariots conventionnels est qu'il peut être entièrement démonté en pièces, ce qui facilite sensiblement le transport car il occupe un volume beaucoup plus réduit.

Pour mieux comprendre l'objet de la présente invention, on a représenté sur le plan ci-joint une réalisation pratique de préférence de celui-ci. Sur ce plan:

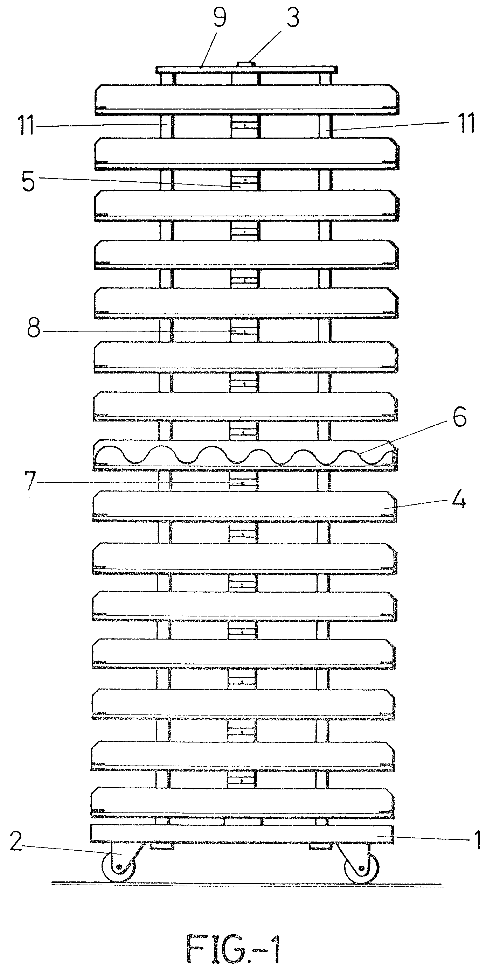

La figure 1 présente une vue en élévation du chariot de cuisson, objet de la présente invention. avec les moyens de blocage des porte-plateaux.

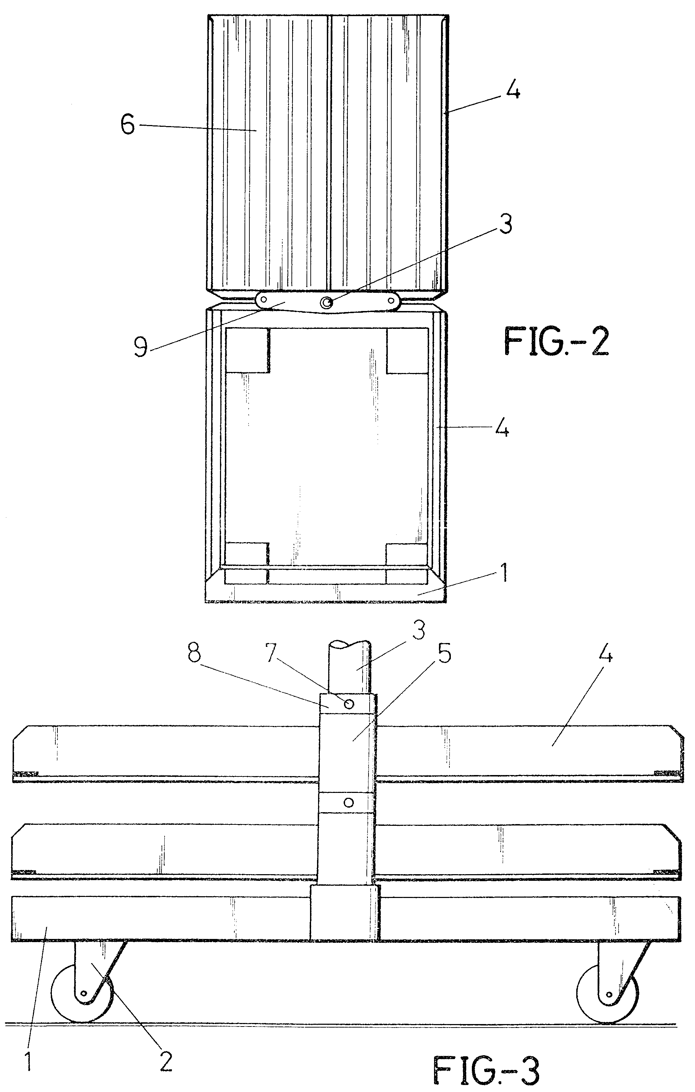

La figure 2 présente une vue de dessus de celui-ci, sans les moyens de blocage des porte-plateaux, l'un de ceux-ci tourné par rapport à la position de transport.

La figure 3 présente une vue en élévation postérieure d'une portion du chariot, où l'on peut observer plus clairement le montage des cadres porte-plateaux sur la barre verticale de support.

Comme on peut observer sur les figures de référence, le chariot qui nous occupe intègre une base de support (1), qui définit des moyens de roulement (2) pour faciliter son déplacement, sur l'un des latéraux de la base (1) est fixée, tout en pouvant être extraite, une barre verticale (3) sur laquelle sont montés de nombreux cadres porte-plateaux (4).

Chacun des porte-plateaux (4) comprend dans l'un de ses latéraux une portion tubulaire (5), dont les dimensions permettent leur montage sur la barre verticale (3), chacun des porte-plateaux (4) pouvant pivoter librement sur la barre (3) pour décrire des tours de n'importe quelle amplitude dans un sens ou dans l'autre, le porte-plateaux demeurant toujours en position horizontale.

La fonction des porte-plateaux (4) consiste à soutenir les plateaux correspondants (6) sur lesquels sont disposées les pièces de pâte.

Sur la barre verticale (3), sont fixées au moyen de cheville (7) des butées cylindriques (8) ayant pour mission d'empêcher le déplacement vertical des porte-plateaux (3) et que le passage de chacun d'eux (3) se transmette à ceux situés au-dessous, ce qui pourrait provoquer qu'en essayant de faire pivoter un des porte-plateaux (3), les plus rapprochés se solidarisent dans le tour.

Sur l'extrémité supérieure de la barre verticale (3) est fixée une plaque (9) qui définit près de ses extrémités les orifices correspondants, passants (10), dans lesquels peuvent s'introduire les extrémités des barres correspondantes (11), dans lesquelles logent les extrémités inférieures dans les sièges respectifs disposés sur l'un des latéraux de la base (1); le positionnement de ces barres (11) se fait lorsqu'on souhaite empêcher le tour des porte-plateaux (4), par exemple, pour réaliser le déplacement du chariot.

Pour positionner, extraire ou manipuler les produits de pâte sur les plateaux (5), il suffit d'extraire les butées de pivotement (11) et de faire pivoter le plateau voulu sur la barre verticale (3) jusqu'à ce que la surface supérieure de celle-ci se trouve découverte, ce qui nous permet un accès direct à celle-ci.

Une fois décrite suffisamment la nature de l'invention, ainsi qu'une réalisation pratique de celle-ci, on signale que l'on peut introduire dans l'invention des changements considérés opportuns, à condition de ne pas altérer les caractéristiques essentielles de celle-ci et qui sont revendiqués ci-après:

## Revendications

**1.-** Chariot de cuisson du type de ceux employés pour le support de produits de boulangerie, pâtisserie et viennoiserie, durant la période de fermentation, de cuisson et, après la cuisson, jusqu'au moment où l'on sort le pain, et qui comprend une base de support avec des moyens d'appui et un nombre variable de porte-plateaux; caractérisé en ce que les cadres porte-plateaux définissent extérieurement sur l'un des latéraux des moyens de support qui permettent leur montage sur une barre verticale solidaire de la base de support, y sur laquelle ils peuvent pivoter librement et de manière indépendante en conservant l'horizontalité; ils se caractérisent également en ce
des butées inter-distantes, qui ne peuvent pas pivoter, sont fixées, qui empêchent le déplacement vertical des porte-plateaux et en ce qu'il comprend des butées de pivotement extractibles qui permettent d'immobiliser les porte-plateaux lorsqu'ils se trouvent alignés sur la barre.

**2.-** Chariot selon la revendication précédente, caractérisé en ce que les moyens de support disposés sur l'un des latéraux du porte-plateaux sont constitués d'un corps tubulaire dont l'axe est disposé perpendiculairement au plan défini par ceux-là et qui présente un diamètre intérieur dont les dimensions permettent le passage par son intérieur de la barre verticale de support.
